# EUROPÄISCHE PATENTSCHRIFT

(11) **EP 0 553 485 B1**
(45) Veröffentlichungstag und Bekanntmachung des Hinweises auf die Patenterteilung: **08.06.1994**
(21) Anmeldenummer: 92121870.7
(22) Anmeldetag: 23.12.1992
(51) Int. Cl.: H04Q 7/04

(54) **Einrichtung zur Herstellung einer drahtlosen Verbindung zwischen privaten Nebenstellenanlagen**
Arrangement for wireless connection between private branch exchanges
Dispositif pour réaliser une liaison "sans fil" entre autocommutateurs privés

(30) Priorität: 22.01.1992 DE 4201561
(43) Veröffentlichungstag der Anmeldung: 04.08.1993
(73) Patentinhaber: Alcatel SEL Aktiengesellschaft, D-70435 Stuttgart (DE)
(72) Erfinder: Weis, Bernd X., Dr., W-7015 Korntal-Münchingen (DE); Turban, Karl-Albert, W-7250 Leonberg (DE); Bezler, Monika, Dr., W-7000 Stuttgart (DE); Schulz, Manfred, W-7254 Hemmingen (DE); Siegmund, Gerd, W-7000 Stuttgart 40 (DE)
(74) Vertreter: Knecht, Ulrich Karl, Dipl.-Ing.

(56) Entgegenhaltungen:
- EP-A- 0 374 787
- IEEE Communications Magazine, vol. 29, no. 1, January 1991, IEEE, New York, US, pages 105-110; C. Buckingham et al.: "A business cordless PABX telephone system on 800 MHz based on the DECT technology"

## Beschreibung

Die Erfindung betrifft eine Einrichtung zur Herstellung einer Verbindung zwischen privaten Nebenstellenanlagen, denen jeweils in einem bestimmten geographischen Bereich eine Basisstation zugeordnet ist, die eine bestimmte Anzahl durch Funk zu bediendender Nutzkanäle zur Verfügung stellt, über die in dem geographischen Bereich mobile schnurlose Endgeräte mit der Basisstation und über diese mit der Nebenstellenanlage in Kommunikation treten können.

Eine Verbindung privater Nebenstellenanlagen war seither, sofern sich geographisch zwischen den Nebenstellenanlagen öffentliches Gelände, z.B. eine Straße, befindet, nur über das öffentliche Telefonnetz möglich.

Der Erfindung liegt die Aufgabe zugrunde, eine Quervorbindung zwischen Nebenstellenanlagen ohne Inanspruchnahme des fest verdrahteten öffentlichen Telefonnetzes zu schaffen.

Erfindungsgemäß wird diese Aufgabe dadurch gelöst, daß im geographischen Bereich einer Basisstation einer Nebenstellenanlage die Basisstation einer zweiten Nebenstellenanlage angeordnet ist, und daß über die beiden Basisstationen und deren Kommunikation per Funk eine drahtlose Querverbindung gebildet wird.

Die Erfindung schafft also eine drahtlose Querverbindung verschiedener Telekommunikationsverbindung, ggf. über öffentliches Gelände hinweg oder innerhalb des eigenen Geländes, dadurch, daß die an den einzelnen Telekommunikationsanlagen angeschlossenen Basisstationen für eine oder ein Bündel von Querleitungen ausgenutzt werden anstatt sie für mobile Endgeräte (Telefone) zu verwenden. Für diese Querverbindung entfällt also die Notwendigkeit der Nutzung teuerer Festverbindungen über das öffentliche Telefonnetz. Evtl. ergeben sich damit auch innerhalb eines bestimmten Geländes, das im Eigentum eines Betreibers steht, kostengünstigere Lösungen im Vergleich mit Draht gebundenen Verbindungen. Dies wird möglich im Rahmen des Systems Digital European Cordless Telecommunication (DECT), das im geographischen Bereich jeweils seiner Basisstation einer Nebenstellenanlage (PABX) eine bestimmte Anzahl von Nutzkanälen für mobile Endgeräte (Telefone) bereitstellt (vgl. zu den Voraussetzungen allgemein C. Buckingham, G.K. Wolterink, D. Akerberg, A Business Cordless PABX Telephone System on 800 MHz based on the DECT Technology, January 1991, IEEE Communications Magazine, S. 105-110).

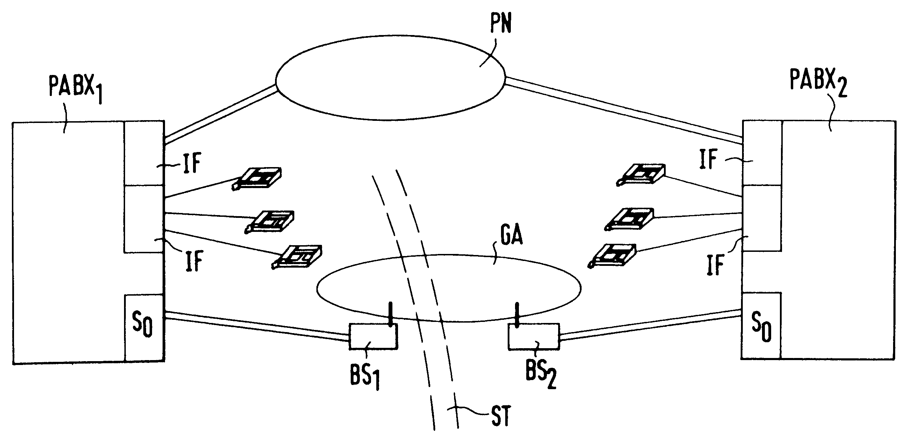

Die einzige Figur zeigt zwei Nebenstellenanlagen PABX₁ und PABX₂ (PABX = Private Automatic Branch Exchange). Beiden Nebenstellenanlagen sind jeweils mehrere Basisstationen über Schnittstellen so zugeordnet, darunter die Basisstationen BS₁ bzw. BS₂. Diese Basisstationen decken jeweils durch Funk, also drahtlos, einen bestimmten geographischen Bereich GA ab z.B. in Gebäuden von 30m oder im Freien von 300m Radius. Innerhalb dieses geographischen Bereichs stellt jede Basisstation eine bestimmte Anzahl untereinander gleichwertiger Kanäle zur Kommunikation zur Verfügung. Beim DECT sind dies 12 Kanäle. Diese geographischen Bereiche der Basisstationen bilden sich an den Rändern überlappende Zellen, durch die ein größeres Gebiet von einer Nebenstellenanlage versorgt wird. Innerhalb der Zellen werden mittels Funk mobile Telefone als Endgeräte versorgt. Den Nebenstellenanlagen PABX können ferner auch, wie eingezeichnet, über drahtgebundene Leitungen mit üblichen Telefone mittels Schnittstellen IF in Verbindung stehen.

Nach der Erfindung befindet sich nun innerhalb der geographischen Reichweite einer Basisstation BS₁, die der ersten Nebenstellenanlage PABX₁ zugeordnet ist, die Basisstation BS₂ einer zweiten Nebenstellenanlage PABX₂, so daß durch drahtlose Kommunikation zwischen den beiden Basisstationen BS₁ und BS₂ eine - drahtlose - Kommunikation zwischen den beiden Nebenstellenanlagen PABX₁ und PABX₂ hergestellt wird. Mit einer Basisstation BS₁ oder BS₂ steht also nicht nur eine bestimmte Anzahl mobiler Telefone, sondern auch eine weitere Basisstation in Verbindung. Damit wird eine Querverbindung zwischen den Nebenstellenanlagen PABX₁ und PABX₂ hergestellt. Über den geographischen Bereich, der von einer Basisstation eines PABX im Rahmen von DECT abgedeckt wird, wird also eine Basisstation einer weiteren Nebenstellenanlage PABX per Funk angesteuert. Es entsteht eine Telekommunikationsanlage/Telekommunikationsanlage-Verbindung über Gelände, z.B. einer Straße ST hinweg, die die seither erforderliche Verbindung von Nebenstellenanlagen über ein öffentliches Netzwerk PN überflüssig macht.

Dabei kommunizieren die beiden Basisstationen BS₁ und BS₂ untereinander in der im Rahmen von DECT vorgesehenen Form, die ja davon ausgeht, daß jede Basisstation über die Bereitstellung einer bestimmten Anzahl von Nutzkanälen mit weiteren Geräten (nämlichen mobilen Telefonen) in Verbindung tritt, während im vorliegenden Fall dann die Verbindung nicht zwischen der Basisstation BS und einem mobilen Telefon als Endgerät, sondern zwischen zwei Basisstationen stattfindet.

Auf diese Weise können also unter Inanspruchnahme der durch DECT bereitgestellten Standardisierung über die dort vorgesehenen Basisstation private Nebenstellenanlagen PABX miteinander in Querverbindung treten.

## Patentansprüche

1. Einrichtung zur Herstellung einer Verbindung zwischen privaten Nebenstellenanlagen (PABX₁,PABX₂), denen jeweils in einem bestimmten geographischen Bereich (BS₁,BS₂) eine Basisstation zugeordnet ist, die eine bestimmte Anzahl durch Funk zu bediendender Nutzkanäle zur Verfügung stellt, über die in dem geographischen Bereich mobile schnurlose Endgeräte mit der Basisstation und über diese mit der Nebenstellenanlage in Kommunikation treten können, **dadurch gekennzeichnet,** daß im geographischen Bereich (GA) einer Basisstation (BS₁) einer Nebenstellenanlage (PABX₁) die Basisstation (BS₂) einer zweiten Nebenstellenanlage (PABX₂) angeordnet ist, und daß über die beiden Basisstationen (BS₁,BS₂) und deren Kommunikation per Funk eine drahtlose Querverbindung gebildet wird.

## Revendications

1. Dispositif pour réaliser une liaison entre autocommutateurs privés (PABX₁, PABX₂), à chacun desquels correspond, dans une zone géographique déterminée (GA), une station de base (BS₁, BS₂) qui dispose d'un nombre déterminé de canaux utiles qui sont à utiliser par radio et par l'intermédiaire desquels des combinés mobiles sans fil peuvent, dans la zone géographique, entrer en communication avec la station de base et, par l'intermédiaire de celle-ci, avec l'autocommutateur, dispositif caractérisé par le fait que dans la zone géographique (GA) d'une station de base (BS₁) d'un autocommutateur (PABX₁), est disposée la station de base (BS₂) d'un second autocommutateur (PABX₂) et par le fait qu'une liaison transversale sans fil se forme par l'intermediaire des deux stations de base (BS₁, BS₂) et de leur communication par radio.

## Claims

1. A system for establishing a connection between private branch exchanges (PABX₁, PABX₂), each having an assigned base station (BS₁, BS₂) in a specific geographic area (GA), where said base station makes available a given number of user information radio channels, via which cordless mobile terminals can communicate with the base station, and via the latter with the private branch exchange, **characterized in that** the base station (BS₂) of a second private branch exchange (PABX₂) is located within the geographic area (GA) of a first base station BS₁ of a private branch exchange (PABX₁), and that a wireless cross-link is formed by the telecommunication between the two base stations (BS₁, BS₂).
